# NEUE EUROPÄISCHE PATENTSCHRIFT

(11) **EP 0 470 297 B2**
(45) Veröffentlichungstag und Bekanntmachung des Hinweises auf die Entscheidung über den Einspruch: **15.10.1997**
(45) Hinweis auf die Patenterteilung: 21.04.1993
(21) Anmeldenummer: 90125129.8
(22) Anmeldetag: 21.12.1990
(51) Int. Cl.: E02D 27/26, E02D 3/02

(54) **Verfahren und Vorrichtung zum Bodenaustausch, insbesondere neben Verkehrswegen und Bauwerken**
Method and device for exchanging soil, especially next to roads and buildings
Procédé et appareil pour le remplacement du sol, particulièrement à proximité de routes et de bâtiments

(30) Priorität: 10.08.1990 DE 4025329
(43) Veröffentlichungstag der Anmeldung: 12.02.1992
(73) Patentinhaber: JOSEF MÖBIUS BAUGESELLSCHAFT (GmbH & Co.), D-22549 Hamburg (DE)
(72) Erfinder: Möbius, Werner, Dipl.-Ing., W-2000 Hamburg 56 (DE)
(74) Vertreter: Patentanwälte Hauck, Graalfs, Wehnert, Döring, Siemons

(56) Entgegenhaltungen:
- EP-A- 0 278 557
- AT-A- 174 868
- CH-A- 378 247
- DE-A- 3 320 772
- DE-A- 3 542 313
- Zeitschrift "Tiefbau, Ingenieurbau, Strassenbau (TIS)", 8/80, S. 678-683
- Lueger "Lexikon der Technik", Bd. 1, Bautechnik, 1972
- Prospekt der Firma KRINGS "Kanalverbau in Perfektion: Krings Verbau", 1/88
- Sonderdruck aus bd-Baumschinendienst, Heft 5/1983, für Firma KRINGS VERBAU: "Der Dreh im Grabenverbau"
- Sonderdruck aus "Hoch-Tiefbau", Februar 1981 für Firma KRINGS-VERBAU"

## Beschreibung

Die Erfindung bezieht sich auf ein Verfahren zum Bodenaustausch, insbesondere neben Verkehrswegen und Bauwerken, entsprechend dem Oberbegriff des Patentanspruchs 1, und auf eine Vorrichtung zum Durchführen dieses Verfahrens.

Bei Verkehrswegen, beispielsweise Eisenbahnstrecken oder Straßen, muß der Untergrund über entsprechende Eigenschaften verfügen, die neben Bodenverfestigungsmaßnahmen unter Umständen nur über einen Austausch des Bodenmaterials mit anschließender Verdichtung zu erreichen ist. Ahnliches gilt für die Einbringung von Fundamenten, um eine ausreichende Tragfähigkeit des Baugrundes zu gewährleisten. Zunehmende Bedeutung hat in den letzten Jahren auch der Austausch von kontaminierten Böden gewonnen.

Üblicherweise wird der Boden mit geeigneten Erdbswegungsvorrichtungen abgetragen und anschließend neues Bodenmaterial aufgebracht. Dazu ist aber eine verhältnismäßig große und offene Baugrube notwendig. Bei Ausführung derartiger Arbeiten in der Nähe von Bauwerken oder in Betrieb befindlichen Verkehrswegen müssen aufwendige Baugrubenverschalungen bzw. Spundwände vorgesehen werden. Offene Baugruben stellen zudem ein Risiko beim Austausch von kontaminierten Böden dar.

Zur Vermeidung einiger dieser Nachteile ist es bekannt, offene Rohre in den auszutauschenden Boden einzurammen, die anschließend entleert und mit neuem Boden material, welches gegebenenfalls teilweise oder vollständig verdichtet wird, gefüllt werden. Die Rohre werden dann aus dem Boden wieder herausgezogen. Beispielsweise sind aus der DE-A- 33 26 246 und der DE-A- 38 23 331 Verfahren und Vorrichtungen bekannt, bei denen Rohre direkt in das Erdreich gerammt werden und ein Entfernen des sich im Rohrinneren ansammelnden Erdreiches ermöglichen.

Die Verwendung von Rohren für Bodenaustauscharbeiten hat allerdings eine Reihe von Nachteilen. Es verbleiben selbst bei dichtesterAnordnung der Rohre noch Zwischenräume im Boden, so daß ein vollständiger Bodenaustausch nicht gewährleistet ist. Gerade dies ist aber bei kontaminierten oder statisch ungünstigen Böden notwendig. Nachteilig ist ferner, daß für ein bestimmtes Bodenareal eine relativ große Zahl von Rohren eingesetzt werden muß. Aufgrund des begrenzten Volumens bzw. Durchmessers der verwendeten Rohre ist die Entleerung und die Befüllung nicht sehr effektiv, u.a. auch deswegen, weil hierzu in der Regel nur sogenannte Polyp-Greifer und keine normalen Greifer oder Tieflöffel eingesetzt werden können. Der Bodenaustausch neben in Betrieb befindlichen Verkehrswegen bzw. Bauwerken erfordert zudem aufwendige Abstützungsmaßnahmen bzw. kann u.U. unmittelbar neben diesen Verkehrswegen oder Bauwerken gar nicht durchgeführt werden.

Aus der DE-A-35 42 313 ist bekanntgeworden, im Querschnitt rechteckige Formkästen dazu zu verwenden, eine wasserdichte Wand im Erdboden herzustellen. Der Formkasten wird in das Erdreich gerammt. Anschließend wird ein Bentonit-Zementgemisch oder ein Zement-Wassergemisch in das Kasteninnere eingeführt unter Verwendung eines geeigneten Schmiermittels, um mit dem Erdmaterial eine Art Mörtel zu bilden. Nachdem dies geschehen ist, wird der Formkasten wieder herausgezogen. Es können zwei Formkästen gleichzeitig eingesetzt werden, wobei der eine, sich bereits im Erdreich befindende Formkasten als Führung für den weiteren Formkasten dient.

Der Erfindung liegt daher die Aufgabe zugrunde, ein Verfahren zu entwickeln, welches einen effektiven Austausch von Böden, bei Minimierung der technischen Aufwendungen, aber unter Einhaltung statischer Anforderungen, erlaubt. Es ist fernerAufgabe der Erfindung, ein Verfahren anzugeben, bei dem ein vollständiger Bodenaustausch gewährleistet ist

Beim erfindungsgemäßen Verfahren werden mindestens drei im Querschnitt rechteckige, rohrartige Behälter derart verwendet, daß jeweils nur der mittlere oder mehrere mittlere von den nebeneinander, Wand an Wand eingeramm- ten Behältern entleert wird oder werden und daß neues Bodenmaterial in den leeren Behälter bzw. die leeren Behälter eingebracht wird, wobei die Behälter entlang einer Arbeitsrichtung so eingesetzt werden, daß der jeweils hintere mit neuem Bodenmaterial gefüllte Behälter herausgezogen wird und vor den jeweils vorderen, eingerammten, noch ursprünglichen Boden enthaltenen Behälter eingerammt wird.

Durch das erfindungsgemäße Verfahren entfallen die sonst bei Bodenaustauscharbeiten in der Nähe von Bauwerken oder im Betrieb befindlichen Verkehrswegen aufwendigen Abstützmaßnahmen oder Bodenaufschüttungen. Die auftretenden Bodenkräfte werden wirksam von den Behältern aufgenommen, die sich gegenseitig stützen und im Hinblick auf den benachbarten statisch belasteten Boden eine Schalung hoher Abstützwirkung bilden. Eine offene Baugrube unmittelbar neben Verkehrswegen und Gebäuden entfällt, und ein nur kurzzeitig leerer Behälter erfährt durch die benachbarten Behälter eine ausreichende Absicherung, so daß im Hinblick auf die statische Belastbarkeit des benachbarten Bodens keine Abstriche gemacht werden müssen.

Die Verwendung von einem Satz von mindestens drei Behältern einer Vorrichtung nach der Erfindung in der beschriebenen Arbeitsweise realisiert eine technologische Kette, die ein kontinuierliches Arbeiten erlaubt. Die Recheteckform der Behälter sichert, daß der gesamte Altboden erfaßt werden kann, ohne daß Abschnitte stehen bleiben.

Die zu verwendenden erfindungsgemäßen rechteckigen Behälter lassen sich an die jeweiligen Baustellenanforderungen anpassen, insbesondere an die Baustellenbreite. Die Behälter können beispielsweise eine Größenordnung von 3,0 m Breite, 1,5 m Tiefe und 5,0 m Höhe besitzen. Sowohl größere wie kleinere Dimensionen lassen sich vorteilhaft je nach Baustelle verwenden. Damit ist ein technologisch günstiger Bodenaushub mit vergleichsweise hoher Leistung erreicht. Durch die Verwendung von relativ großvolumigen Behältern ist der Austausch unter anderem auch deswegen effektiv, da zum großen Teil normale Greifer oder Tieflöffel für die Entleerung der Behälter eingesetzt werden können. Dies ist bei den bekannten Verfahren bzw. bei den verwendeten Rohren nicht oder nur sehr eingeschränkt möglich.

Ausführungsbeispiele der Erfindung werden nachfolgend anhand von Zeichnungen näher erläutert
- Fig. 1: zeigt einen Schnitt durch einen Eisenbahndamm mit einem eingerammten, viereckigen Behälter einer Vorrichtung nach der Erfindung.
- Fig. 2: zeigt gemäß Fig. 1 eine Draufsicht mit drei eingerammten, viereckigen Behältern einer Vorrichtung nach der Erfindung.
- Fig. 3: zeigt eine Skizze zum Ablauf des Verfahrens nach der Erfindung.
- Fig. 4: zeigt einen viereckigen Behälter einer Vorrichtung nach der Erfindung.

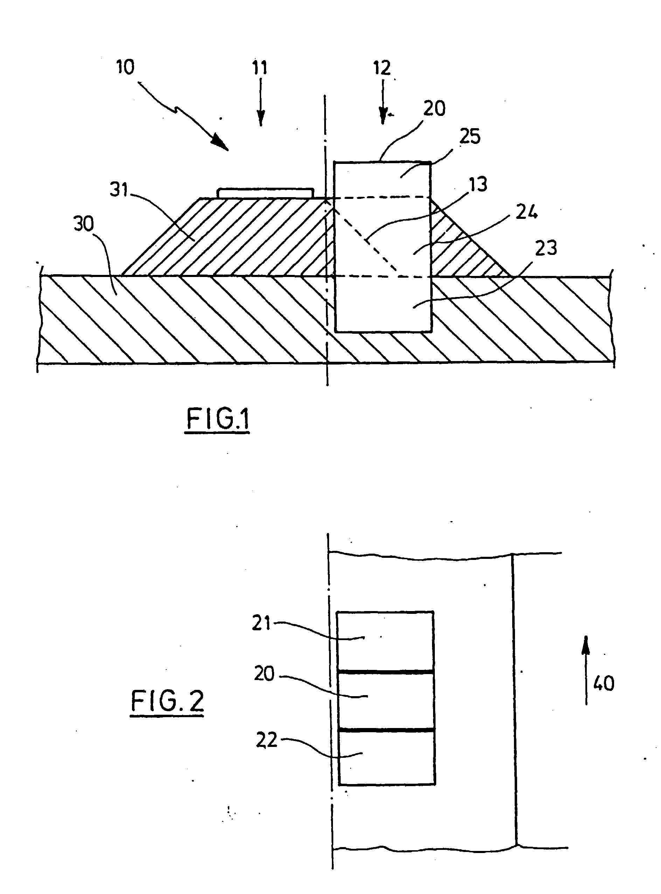

Fig. 1 zeigt im Schnitt einen Eisenbahndamm 10 mit einem in Betrieb befindlichen, linken Abschnitt 11 und einem rechten Abschnitt 12, bei dem der Boden ausgetauscht werden soll. Die gestrichelt gezeichnete Linie 13 stellt den Verlauf der Bodenaufschüttung dar, die bei einer offenen Baugrube zur Abstützung des einen Abschnitts notwendig wäre.

Ein im Querschnitt rechteckiger Behälter 20 wird unmittelbar neben dem im Betrieb befindlichen Abschnitt 11 des Verkehrsweges 10 eingerammt. In Fig. 2 ist zu erkennen, daß drei rechteckige Behälter 20, 21, 22 unmittelbar nebeneinander, Wand an Wand in den Boden eingerammt sind.

Der Behälter 20 in Fig. 1 kann in einen unteren, mittleren und oberen Abschnitt 23, 24, 25 unterteilt werden. Der untere Behälterabschnitt 23 befindet sich in einer nichtauszutauschenden Bodenschicht 30, der mittlere Behälterabschnitt 24 in einer auszutauschenden Bodenschicht 31 und der obere Teil 25 des Behälters 20 ragt über den Boden. Die nach Entnahme des auszutauschenden Bodens 31 an den dann zum Teil leeren Behälter 20 angreifende Kraft, wird durch den unteren Behälterabschnitt 23 aufgenommen. Ferner wird, wie in Fig. 2 gezeigt, die Kraft von in einer Arbeitsrichtung 40 vor und hinter den leeren Behälter 20 eingerammten Behältern 21 und 22 aufgenommen.

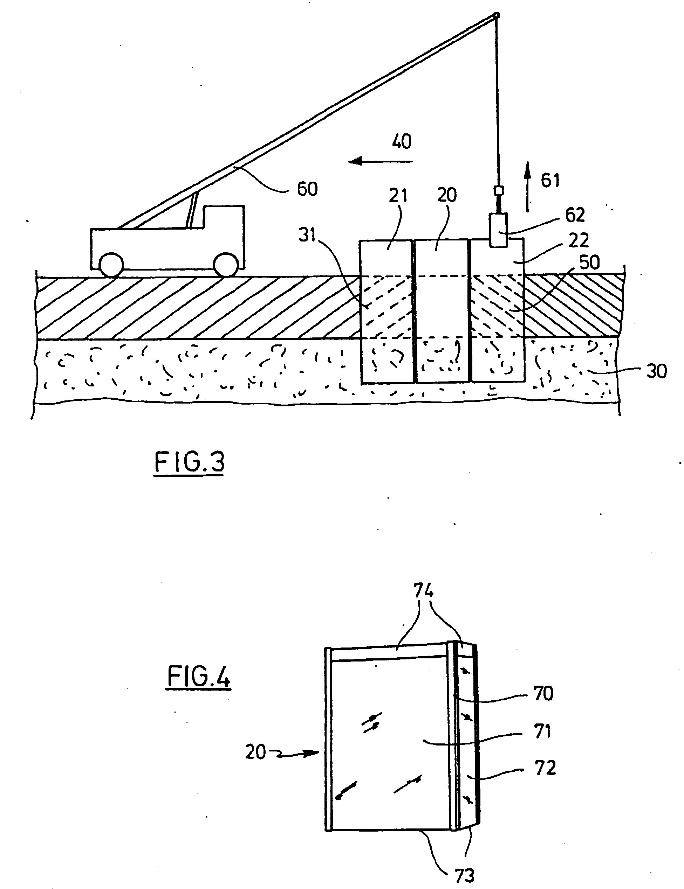

Anhand von Fig. 3 wird der Verfahrensablauf näher erläutert. Entlang der Arbeitsrichtung 40 ist die Bodenschicht 31 oberhalb der nicht auszutauschenden Bodenschicht 30 gegen neues Bodenmaterial 50 auszutauschen. Während eines Stadiums des Verfahrens sind drei rechteckige Behälter 20, 21, 22 in den Boden eingerammt. Im in Arbeitsrichtung 40 vorderen Behälter 21 befindet sich noch die auszutauschende Bodenschicht 31. Im in Arbeitsrichtung 40 hinteren Behälter 22 ist die auszutauschende Bodenschicht 31 bereits aus dem Behälter entfernt und durch neues Bodenmaterial 50 ersetzt worden. Der mittlere Behälter 20 wird entleert und anschließend mit neuem Bodenmaterial 50 gefüllt. Der neue Boden 50 wird gegebenenfalls verdichtet. Danach wird der Behälter 22 mittels eines Krans 60 und eines Vibrators 62 aus dem Boden herausgezogen, dargestellt durch Pfeil 61, und in Arbeitsrichtung 40 vor den Behälter 21 Wand an Wand mit diesem wieder eingerammt. In dem nun mittleren Kasten 21 kann der Boden, wie oben für Behälter 20 beschrieben, entsprechend ausgetauscht werden.

Der für das Verfahren zu verwendende, oben und unten offene, rechteckige Behälter 20 ist in Fig. 4 dargestellt. Der Behälter 20 weist einen aus Winkelprofilen 70 bestehenden Stahlrahmen auf, in dem Stahlplatten 71, 72 angebracht sind. Am unteren Ende des Behälters 20 sind Schneiden 73 ausgebildet, während am oberen Ende Plattenstreifen 74 montiert sind für den wirksamen Angriff des Vibrators 62. Die Breite des Behälters 20 kann an die Breite eines mit neuem Bodenmaterial zu versehenen Bodenstreifens angepaßt werden bzw. einem ganzzahligen Teil dieser Breite entsprechen.

## Patentansprüche

1. Verfahren zum Bodenaustausch, insbesondere neben Verkehrswegen und Bauwerken, mit folgenden Verfahrensvorschriften: Einrammen eines oben und unten offenen, rohrartigen Behälters in den Boden, Entleeren des Behälters nach dem Einrammen, Einbringen neuen Bodenmaterials in den leeren Behälter mit gegebenenfalls Verdichtung des Bodens, Herausziehen des Behälters aus dem Boden, dadurch gekennzeichnet, daß mindestens drei im Querschnitt rechteckige, rohrartige Behälter (20, 21, 22) derart verwendet werden, daß jeweils nur der mittlere oder mehrere mittlere von den nebeneinander, Wand an Wand eingerammten Behältern entleert wird oder werden und daß neues Bodenmaterial in den leeren Behälter bzw. die leeren Behälter eingebracht wird, wobei die Behälter entlang einer Arbeitsrichtung (40) so eingesetzt werden, daß der jeweils hintere mit neuem Bodenmaterial (50) gefüllte Behälter (22) herausgezogen wird und vor den jeweils vorderen, eingerammten, noch ursprünglichen Boden (31) enthaltenden Behälter (21) eingerammt wird.

2. Vorrichtung zum Durchführen des Verfahrens nach Anspruch 1, bestehend aus einem Satz von mindestens drei im Querschnitt rechteckigen, rohrartigen Behältern (20, 21, 22), von denen jeder einen aus Winkelprofilen (70) bestehenden Stahlrahmen aufweist, in dem Stahlplatten (71, 72) angebracht sind.

3. Vorrichtung nach Anspruch 2, dadurch gekennzeichnet, daß am unteren Ende jedes Behälters Schneiden (73) ausgebildet sind und am oberen Ende Plattenstreifen (74) montiert werden.

4. Vorrichtung nach Anspruch 2 oder 3, dadurch gekennzeichnet, daß die Breite jedes Behälter der Breite eines mit neuem Bodenmaterial (50) zu versehenden Bodenstreifens (12) entspricht oder einem ganzzahligen Teil der Breite.

## Claims

1. A method for exchanging soil, particularly next to roads and buildings, including the following steps: ramming an open ended tube-like container into the soil, evacuating the container after being rammed into the soil, charging the empty container with fresh soil material, with the soil material occasionally compressed, withdrawing the container from the soil, characterized in that at least three tubular containers (20, 21, 22) rectangular in cross section are used such that merely the medium container or a plurality of medium containers rammed into the soil wall-to-wall are emptied and that fresh soil material is filled into the empty container(s),with the containers used along a working direction (40) such that the rearward container (22) filled with fresh soil material (50) is withdrawn and rammed into the soil (31) in front of the forward container (21) rammed into the soil (31) and containing original soil material.

2. An apparatus to carry out the method of claim 1, including a battery of at least three tubular containers (20, 21, 22) rectangular in cross-section each container including a steel frame of angular profiles (70), with steel plates (71, 72) being mounted to the frame.

3. The apparatus of claim 2, characterized in that the lower end of each container has cutting edges (73) and plate shaped stripes (74) are mounted to the upper end.

4. The apparatus according to claim 2 or 3, characterized in that the width of each container corresponds to the width of a soil track (22) or an integral part of the width of the soil track to be provided with fresh soil material (50).

## Revendications

1. Procédé pour remplacer des sols, notamment près de voies de circulation et de bâtiments, comprenant les étapes suivantes :
- enfoncer dans le sol un conteneur tubulaire ouvert en haut et en bas,
- vider le conteneur après enfoncement,
- introduire dans le conteneur vide du nouveau matériau de sol, avec compactage éventuel du sol,
- arrachage du conteneur hors du sol,
caractérisé en ce qu'on utilise au moins trois conteneurs tubulaires, à section rectangulaire, (20, 21, 22) de telle façon qu'on ne vide que le ou les conteneurs du milieu parmi les conteneurs enfoncés l'un à côté de l'autre, paroi contre paroi ;
et ce qu'on introduit du nouveau matériau de sol dans le ou les conteneurs vides, les conteneurs étant disposés selon une direction de travail (40) de telle façon qu'on arrache chaque fois le conteneur (22) qui a été rempli avec du nouveau matériau de sol (50), et on l'enfonce devant le conteneur enfoncé en avant, et qui contient encore du sol primitif (31).

2. Dispositif pour la mise en oeuvre du procédé selon la revendication 1, constitué d'un jeu d'au moins trois conteneurs de section rectangulaire (20, 21, 22) dont chacun est formé de cornières (70) en acier, dans lesquelles sont fixées des tôles d'acier (71, 72).

3. Dispositif selon la revendication 2, caractérisé en ce que des tranchants (73) sont formés à l'extrémité inférieure de chaque conteneur, et des profilés plats (74) sont montés à l'extrémité supérieure.

4. Dispositif selon la revendication 2 ou 3, caractérisé en ce que la largeur de chaque conteneur correspond à celle de la bande du sol à pourvoir de nouveau matériau de sol, ou à un sous-multiple de cette dernière largeur.
